(19) Europäisches Patentamt
European Patent Office
Office européen des brevets

(11) **EP 2 566 003 A2**

(12) **EUROPÄISCHE PATENTANMELDUNG**

(43) Veröffentlichungstag:
**06.03.2013 Patentblatt 2013/10**

(21) Anmeldenummer: **12182245.6**

(22) Anmeldetag: **29.08.2012**

(51) Int Cl.:
*H02J 3/32* (2006.01)    *G01R 19/00* (2006.01)
*G01R 21/06* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **31.08.2011  DE 102011111972**

(71) Anmelder: **Kostal Industrie Elektrik GmbH**
**58513 Lüdenscheid (DE)**

(72) Erfinder: **Bartling, Ralf, Dr.**
**58730 Fröndenberg (DE)**

(74) Vertreter: **Kerkmann, Detlef**
**Leopold Kostal GmbH & Co. KG**
**Rechte & Patente**
**An der Bellmerei 10**
**58513 Lüdenscheid (DE)**

(54) **Energieverteilungsanlage mit einer Steuervorrichtung und einem Stromsensor**

(57)    Beschrieben wird eine Energieverteilungsanlage mit einer Steuervorrichtung und mit einem Stromsensor, wobei an die Steuervorrichtung mindestens eine elektrische Energiequelle und mindestens ein elektrischer Energiespeicher anschließbar ist, wobei die Steuervorrichtung eine Ausgangsleitung aufweist, die mit einem Verbindungsknotenpunkt einer Hauptleitung verbindbar ist, welche eine lokale Installation und ein Spannungsnetz verbindet, und wobei die Steuervorrichtung Spannungswandler aufweist, die erstens die von der Energiequelle und dem Energiespeicher eingespeiste Spannungen in eine ein- oder mehrphasige Wechselspannung wandeln, deren Spannungshöhe und Frequenz derart ist, dass die Wechselspannung zur Versorgung der lokalen Installation und zur Einspeisung in das Spannungsnetz geeignet ist, und die zweitens aus der Spannung der Energiequelle eine Spannung zum Laden des Energiespeichers generieren, wobei die Steuervorrichtung die an jedem Phasenleiter der Ausgangsleitung vorliegenden Stromwerte und Spannungswerte erfasst, und wobei der Stromsensor den Strom in der Hauptleitung zwischen der lokalen Installation und dem öffentlichen Spannungsnetz an jedem Phasenleiter durch jeweils einen induktiven Stromwandler erfasst. Beschrieben wird außerdem ein vorteilhaft verwendbarer Stromsensor für die Energieverteilungsanlage.

Fig. 1

**Beschreibung**

Die Erfindung betrifft eine Energieverteilungsanlage mit einer Steuervorrichtung und einem Stromsensor nach dem Oberbegriff des Anspruchs 1, sowie einen hierbei vorteilhaft verwendbaren Stromsensor.

Aus der deutschen Gebrauchsmusterschrift DE 20 2010 012 658 U1 ist eine Steuereinheit zur Regelung, Einspeisung und Speicherung von elektrischer Energie aus dem Stromnetz unter Einbindung regenerativer oder anderer lokaler Energiequellen bekannt.

Derartige Energieverteilungsanlagen finden Anwendung für das Energiemanagement von insbesondere regenerativen Energiequellen mit zeitlich wechselnder Ausgangsleistung, wie z. B. Photovoltaik- oder Windkraftanlagen. Die folgende Erläuterung bezieht sich rein beispielhaft und ohne Beschränkung der Allgemeinheit auf eine Photovoltaikanlage.

Photovoltaikanlagen zur zumindest unterstützenden Energieversorgung von Gebäuden finden zunehmende Verbreitung. Ein Problem derartiger Anlagen besteht darin, dass die elektrische Leistungsabgabe des Photovoltaikgenerators über den Tagesverlauf starken Schwankungen unterliegt und praktisch nie genau dem momentanen Energiebedarf der im Gebäude installierten Verbraucher, im folgenden kurz als lokale Installation bezeichnet, entspricht.

So kann eine Photovoltaikanlage während der hellen Tagesstunden eine elektrische Leistung erzeugen, die weit über den elektrischen Leistungsbedarf der lokalen Installation hinausgeht, so dass überschüssige elektrische Energie in ein öffentliches Spannungsnetz eingespeist werden kann. In der übrigen Zeit kann es dagegen notwendig sein, zum Ausgleich von Energiedefiziten, dem öffentlichen Spannungsnetz elektrische Energie zu entnehmen. Gegenwärtig wird elektrische Energie, die von einer Photovoltaikanlage erzeugt und auch in der lokalen Installation selbst verbraucht wird, mit einem größeren Vergütungssatz versehen als die direkt in das Netz eingespeiste Energie. Es ist daher wünschenswert, den sogenannten Eigenverbrauch zu optimieren. Darüber hinaus ist in Zukunft zu erwarten, dass der Preis für aus dem Stromnetz entnommene elektrische Energie weiter steigt und in den nächsten Jahren über den Vergütungssatz für photovoltaisch erzeugte Energie ansteigt. Ein weiterer Vorteil des Eigenverbrauchs ist eine Entlastung der Netze, da je nach Dimensionierung der Anlage der solare Deckungsgrad weiter gesteigert werden kann.

Photovoltaikanlagen mit einer Eigenverbrauchsoptimierung weisen als Energiespeicher Akkumulatoren auf, welche mehrere Kilowattstunden elektrischer Energie speichern können. Die Einspeisung bzw. Entnahme elektrischer Energie aus dem öffentlichen Spannungsnetz erfolgt hier nur noch dann, wenn das Pufferungsvermögen des Energiespeichers überschritten wird oder wenn dies aufgrund von tageszeitbezogenen Stromtarifen einträglich ist.

Die Optimierung des Eigenverbrauchs erfordert ein Energiemanagement durch eine Steuervorrichtung. Zur Generierung von Eingangsgrößen für die Steuervorrichtung ist eine Messung der mit dem öffentlichen Spannungsnetz ausgetauschten elektrischen Leistung erforderlich.

Üblich ist es, einen bidirektional messenden elektronischen Energiezähler in die Hauptleitung zwischen dem Spannungsnetz und der lokalen Installation zu schalten. Solche Energiezähler erfassen sowohl die Entnahme als auch die Einspeisung elektrischer Energie in das Spannungsnetz, indem sie Strom- und Spannungswerte erfassen und rechnerisch zu elektrischen Leistungsdaten aufbereiten. Dabei ist es bekannt, dass bidirektionale Energiezähler Leistungsdaten über eine optische Schnittstelle ausgeben können. Leider liegen hierzu derzeit noch keine standardisierten Protokolle vor, so dass zur Übertragung der Daten an die Steuervorrichtung die Software der Steuervorrichtung an den jeweiligen Energiezähler anzupassen ist.

Sind diese Protokolle nicht offengelegt, so ist das Auslesen besonders schwierig oder sogar unmöglich. Hierdurch ergeben sich Kompatibilitätsprobleme zwischen den Produkten verschiedener Hersteller, und zwar insbesondere dann, wenn ein Anwender die Steuervorrichtung oder den Energiezähler gegen ein Gerät anderen Typs austauschen möchte. Ein weiteres Problem ist, dass die zur Verfügung gestellten Daten nur in einem groben Zeitraster zur Verfügung stehen.

Es stellte sich die Aufgabe, eine Energieverteilungsanlage zu schaffen, welche diese Nachteile nicht aufweist.

Diese Aufgabe wird erfindungsgemäß dadurch gelöst, dass die Steuervorrichtung die an jedem Phasenleiter der Ausgangsleitung vorliegenden Stromwerte und Spannungswerte erfasst, und dass der Stromsensor den Strom in der Hauptleitung zwischen der lokalen Installation und dem öffentlichen Spannungsnetz an jedem Phasenleiter durch jeweils einen induktiven Stromwandler erfasst.

Aus der oben erwähnten DE 20 2010 012 658 U1 ist bereits eine Energieverteilungsanlage mit einer Eigenverbrauchsoptimierung und die Verwendung von Stromsensoren bekannt. Die Stromsensoren sind dort allerdings nicht als induktive Stromsensoren offenbart und werden auch nicht in der Hauptleitung verwendet. Auch ist keine Stromerfassung an einzelnen Phasenleiter beschrieben.

Die erfindungsgemäße Energieverteilungsanlage ermöglicht eine Erfassung der über die Hauptleitung übertragenen elektrischen Leistungen, ohne dass auf die Datenausgabe des in der Hauptleitung liegenden bidirektionalen Energiezählers zugegriffen werden muss. Es besteht daher keine Notwendigkeit, den Energiezähler im Hinblick auf die Software der Steuervorrichtung zu wählen oder umgekehrt, die Software der Steuervorrichtung speziell an den verwendeten Energiezähler anzupassen.

Es ist lediglich ein vergleichsweise kostengünstig ausführbarer mehrphasig messender Stromsensor vorzusehen, der zusammen mit der Steuervorrichtung verwendbar ist. Ein hierzu geeigneter Stromsensor besteht aus drei induktiven Stromwandlern, die jeweils den in einem Phasenleiter fließenden Strom erfassen. Eine einphasige Ausführung ist hier ebenfalls denkbar. Eine vorteilhafte Ausführung eines Stromwandlers besteht aus einer Ringkernspule, durch deren Ringöffnung ein Phasenleiter hindurchführbar ist.

Eine weitere vorteilhafte Ausführung eines Stromwandlers weist mehrere miteinander verbindbare Kernelemente auf, die um einen Phasenleiter herumgelegt und dann zu einem ringförmigen oder mehreckig ausgeführten geschlossenen Kern verbunden werden können. Vorteilhaft hierbei ist, dass die elektrische Verbindung von bereits angeschlossenen Phasenleitern zum Anlegen der Stromwandler nicht aufgetrennt werden muss, wodurch die Montage der Stromwandler besonders einfach wird.

Derartige Stromwandler sind als Einzelteile bereits kostengünstig im Handel erhältlich. Vorteilhafterweise erfordern sie nur einen geringen Installationsaufwand, da sie beispielsweise direkt auf einer DIN-Hutschiene montierbar sind. Da induktive Stromwandler passiv messende Systeme sind, benötigen sie vorteilhafterweise auch keine eigene Spannungsversorgung. Darüber hinaus wird durch den Einsatz derartiger Stromwandler eine galvanische Trennung vom Potential des zu messenden Leiters erreicht, was die Aufbereitung des Messsignals in der Steuervorrichtung deutlich vereinfacht.

Besonders vorteilhaft ist, dass die Steuervorrichtung durch Erfassung des zeitlichen Stromverlaufs an allen drei Phasenleitern eines Dreiphasenwechselstroms und einer internen Erfassung des zugehörigen zeitlichen Spannungsverlaufs sämtliche Daten zur Berechnung von Wirk-, Blind- und Scheinleistungen der Anlage zur Verfügung hat und diese Zustandsgrößen zum Energiemanagement verwenden kann.

Im Folgenden sollen zwei Ausführungsbeispiele der Erfindung anhand der Zeichnung dargestellt und näher erläutert werden. Beide Figuren zeigen jeweils in Form eines stark vereinfachten Blockschaltbilds den Aufbau einer Energieverteilungsanlage, die elektrische Energie zur Versorgung einer lokalen Installation, welche etwa durch die Gesamtheit der Verbraucher eines Gebäudes gegeben sein kann, bereitstellt und die darüber hinaus elektrische Energie in ein öffentliches Spannungsnetz einspeisen kann.

Zentrales Element der Energieverteilungsanlage ist eine Steuervorrichtung 5, an die ein Solargenerator 10 und ein Energiespeicher 11 angeschlossen sind. Der Solargenerator 10 besteht aus einer Vielzahl von, hier nicht im Einzelnen dargestellten, Photovoltaikmodulen, welche wiederum jeweils eine Vielzahl von Solarzellen aufweisen. Der Solargenerator 10 wandelt Strahlungsenergie der Sonne in elektrische Energie um, wobei die abgegebene elektrische Leistung in Abhängigkeit vom momentanen Lichteinfall im Tagesverlauf mehr oder weniger stark variiert.

Um die Leistungsabgabe der Energieverteilungsanlage besser an den Bedarf der lokalen Installation 3 anzupassen, ist der Energiespeicher 11 vorgesehen, der vorzugsweise aus einer Zusammenschaltung von Akkumulatoren mit einer Gesamtkapazität in der Größenordnung mehrerer Kilowattstunden besteht. Der Energiespeicher 11 kann durch die vom Solargenerator 10 abgegebene elektrische Energie geladen werden. Darüber hinaus kann er in Zeiten, in denen der Leistungsbedarf der lokalen Installation 3 die abgegebene Leistung des Solargenerators 10 überschreitet, die fehlende Leistung ausgleichen.

Sowohl dem Solargenerator 10 als auch dem Energiespeicher 11 ist innerhalb der Steuervorrichtung 5 ein DC/DC-Wandler 8, 9 zugeordnet, welche die vom Solargenerator 10 beziehungsweise dem Energiespeicher 11 abgegebenen Spannungen auf das zur Einspeisung in das öffentliche Spannungsnetz 1 erforderliche Spannungsniveau bringen. Die Ausgangsspannungen der DC/DC-Wandler 8, 9 werden von einem DC/AC-Wandler 7 in eine zur Versorgung der lokalen Installation 3 oder zur Einspeisung in das Spannungsnetz 1 geeignete mehrphasige Wechselspannung umgewandelt. Der DC/DC-Wandler 9 muss bidirektional ausgeführt sein, um ein Laden des Energiespeichers 11 aus der Ausgangsspannung des DC/DC-Wandlers 8 zu ermöglichen.

Die Ausgangsspannung des DC/AC-Wandlers 7 wird auf eine Ausgangsleitung 18 geführt, die über einen Solarenergiezähler 4 mit einem Verbindungsknotenpunkt 16 der Hauptleitung 15 verschaltet ist. Der Solarenergiezähler 4 dient zur Ermittlung der von dem Solargenerator 10 und dem Energiespeicher 11 in die lokale Installation 3 bzw. das Spannungsnetz 1 eingespeisten Energiemenge.

In die Hauptleitung 15, welche die Verbindung zwischen dem öffentlichen Spannungsnetz 1 und der der lokalen Installation 3 herstellt, ist ein bidirektional messender elektronischer Energiezähler 2 eingeschleift, der sowohl die aus dem öffentlichen Spannungsnetz 1 bezogene als auch die in das öffentliche Spannungsnetz 1 eingespeiste Energiemenge erfasst.

Die von dem Energiezähler 2 erfassten Messwerte werden von der Steuervorrichtung 5 *nicht* zur Auswertung verwendet, da das Ausgabeformat dieser Daten vom Typ des verwendeten Energiezählers 2 abhängen, und daher die sichere Erfassbarkeit der Daten nicht gewährleistet ist. Vorgesehen ist stattdessen ein universell einsetzbarer Stromsensor 12, der für jeden Phasenleiter 6 der Hauptleitung 15 einen induktiven Stromwandler 19 vorsieht. Die Stromwandler 19 sind jeweils als Ringkernspule ausgebildet, bestehend aus jeweils einem Ringkern 20, durch dessen Ringöffnung jeweils ein Phasenleiter 6 hindurchgeführt ist und auf den eine Spulenwicklung 21 aufgebracht ist, an der ein stromproportionales Messsignal abgenommen werden kann. Die Messsignale aller drei Stromwandler 19 werden über eine mehradrige Signalleitung 13 und einer Signalkonditionierung in der Steuervorrichtung 5 einem Messeingang eines Mikrocontrollers 17 zugeführt. Der Mikrocontroller 17 ist ein zentraler Bestandteil der Steuervorrichtung 5 und kontrolliert die inneren und äußeren Abläufe der Steuervorrichtung 5.

In der weiteren Beschreibung sind die Größen u_pv, i_pv, i_grid und i_local als ein- oder mehrphasig zu verstehen, auch wenn sie im Text nur in der Einzahl genannt sind. Für eine exakte Leistungsmessung ist die Erfassung der Augenblickswerte von Spannungen und Strömen an jedem der drei Phasenleiter 6 erforderlich. Der Spannungswert u_pv an der Ausgangsleitung 18 wird durch den Spannungssensor 14 noch innerhalb der Steuervorrichtung 5 erfasst. Der erfasste Spannungswert u_pv wird dabei für die gesamte Energieverteilungsanlage als repräsentativ angenommen. Dies ist mit ausreichender Genauigkeit möglich, da an den Zählern und an der Verkabelung keine signifikanten Spannungsabfälle zu erwarten sind.

Die Strommessung muss jedoch außerhalb der Steuervorrichtung 5 erfolgen. Hierzu ist der Stromsensor 12 mit passiven induktiven Stromwandlern 19 vorgesehen, um den Augenblickswert des Stromes i_grid bzw. i_local potentialgetrennt auf einen Sekundärstromkreis zu übertragen. Dieser Sekundärstrom entspricht dem zeitlichen Verlauf des zu messenden Stromes und wird, übersetzt mit dem Wandlerverhältnis des Stromwandlers, von der Steuereinrichtung 5 erfasst. Nach einer Signalkonditionierung in der Steuervorrichtung 5 wird das Signal dann von dem Mikrocontroller 17 gemessen.

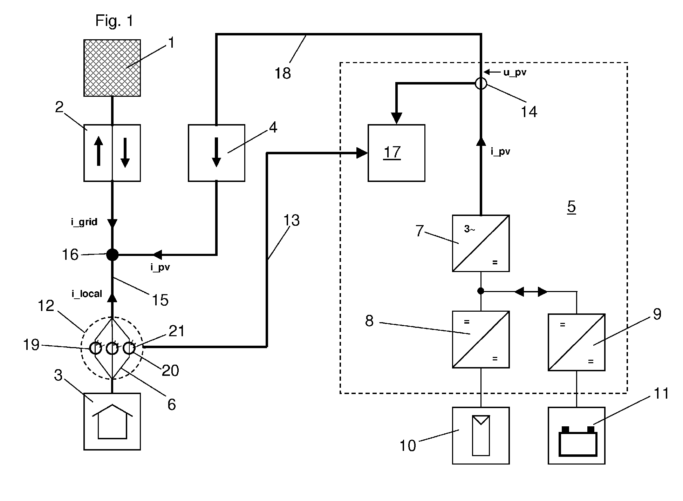

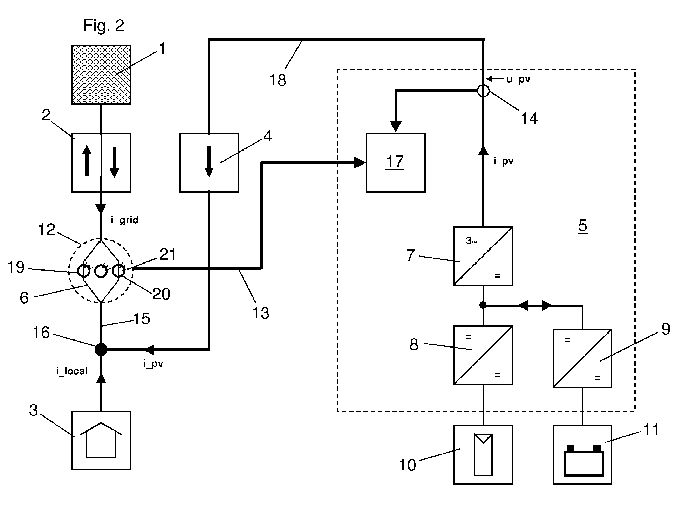

Wie die Figuren 1 und 2 verdeutlichen, können dem Verbindungspunkt 16 drei zufließende Teilströme i_local, i_pv, i_grid zugeordnet werden, wobei i_local der auf die lokale Installation bezogene Teilstrom, i_pv der von der Ausgangsleitung 18 der Steuervorrichtung 5 zufließende Teilstrom und i_grid der aus dem öffentlichen Spannungsnetz 1 stammende Teilstrom ist. Nach der Kirchhoffschen Knotenregel gilt:

$$i\_local + i\_pv + i\_grid = 0$$

Je nachdem, auf welcher Seite des Verbindungsknotenpunktes 16 der Stromsensor 12 in die Hauptleitung 15 geschaltet ist, erfasst der Stromsensor 12 an den drei Phasenleitern 6 die Augenblickswerte von 1_local (Figur 1) beziehungsweise von i_grid (Figur 2).

In der Ausführungsform gemäß der Figur 1 werden somit i_pv und i_local gemessen. Die Steuervorrichtung 5 bestimmt i_grid aus diesen Werten gemäß der oben genannten Knotenregel zu

$$i\_grid = - i\_pv - i\_iocal$$

Werden entsprechend der Figur 2 die die Werte für i_pv und i_grid gemessen, so kann die Steuervorrichtung 5 den Wert für i_local über den Zusammenhang

$$i\_local = - i\_pv - i\_grid$$

bestimmen.

In beiden Fällen stehen der Steuervorrichtung 5 die Augenblickswerte aller drei Teilströme i_local, i_pv und i_grid sowie der erfasste Spannungswert u_pv zur Verfügung. Damit kann die Steuervorrichtung 5 somit alle für ein Energiemanagement relevanten elektrischen Leistungsdaten bestimmen. Wesentlich ist, dass alle Strom- und Spannungswerte als Augenblickswerte erfasst werden und mit einer hohen Wiederholfrequenz, von beispielsweise 16000 Hz, vom Mikrocontroller 17 gemessen und verarbeitet werden.

Da aus den in kurzen Abständen regelmäßig erfassten Messwerten auch die Phasenbeziehungen zwischen den Strom- und Spannungsverläufen bestimmbar sind, kann die Steuervorrichtung 5 vorteilhafterweise sowohl Wirkals auch Blind- und Scheinleistungen der gesamten Einrichtung ermitteln.

Anzumerken ist, dass die in den Figuren 1 und 2 dargestellten Ausführungen einer Energieverteilungsvorrichtung zueinander funktionell gleichwertig sind. Es ist jedoch vorteilhaft, dass in der Figur 1 die Strommessung jenseits des Verbindungsknotenpunkts 16 entfernt vom Energiezähler 2 erfolgt, da der in der Figur 2 dargestellte Strommesspunkt in der Nähe des Energiezählers 2 oftmals nicht frei zugänglich ist, weil die entsprechenden Leitungsabschnitte verplombt sind. Die Ausführungsform gemäß der Figur 1 ist auch in einem solchen Fall problemlos realisierbar.

**Bezugszeichen**

| 1 | Spannungsnetz |
|---|---|
| 2 | Energiezähler (bidirektional) |
| 3 | lokale Installation |
| 4 | Solarenergiezähler |
| 5 | Steuervorrichtung |
| 6 | Phasenleiter |
| 7 | DC/AC-Wandler |
| 8 | DC/DC-Wandler |
| 9 | DC/DC-Wandler (bidirektional) |
| 7, 8, 9 | Spannungswandler |
| 10 | Solargenerator (Energiequelle) |
| 11 | Akkumulator (Energiespeicher) |
| 12 | Stromsensor |
| 13 | Signalleitung |
| 14 | Strom- und Spannungssensoren |
| 15 | Hauptleitung |
| 16 | Verbindungsknotenpunkt |
| 17 | Mikrocontroller |
| 18 | Ausgangsleitung |
| 19 | Stromwandler |
| 20 | Ringkern |
| 21 | Spulenwicklung |

| i_grid, i_local, i_pv | (Teil-)ströme |
|---|---|
| u_pv | Spannung(swerte) |

**Patentansprüche**

1. Energieverteilungsanlage mit einer Steuervorrichtung (5) und mit einem Stromsensor (12), wobei an die Steuervorrichtung (5) mindestens eine elektrische Energiequelle (10) und mindestens ein elektrischer Energiespeicher (11) anschließbar ist, wobei die Steuervorrichtung eine Ausgangsleitung (18) aufweist, die mit einem Verbindungsknotenpunkt (16) einer Hauptleitung (15) verbindbar ist, welche eine lokale Installation (3) und ein Spannungsnetz (1) verbindet, und wobei die Steuervorrichtung Spannungswandler (7, 8, 9) aufweist, die erstens die von der Energiequelle (10) und dem Energiespeicher (11) eingespeiste Spannungen in eine ein- oder mehrphasige Wechselspannung wandeln, deren Spannungshöhe und Frequenz derart ist, dass die Wechselspannung zur Versorgung der lokalen Installation (3) und zur Einspeisung in das Spannungsnetz (1) geeignet ist, und die zweitens aus der Spannung der Energiequelle (10) eine Spannung zum Laden des Energiespeichers (11) generieren, **dadurch gekennzeichnet,** **dass** die Steuervorrichtung (5) die an jedem Phasenleiter (6) der Ausgangsleitung (18) vorliegenden Stromwerte (i_pv) und Spannungswerte (u_pv) erfasst, und **dass** der Stromsensor (12) den Strom (i_grid bzw. i_local) in der Hauptleitung (15) zwischen der lokalen Installation (3) und dem öffentlichen Spannungsnetz (1) an jedem Phasenleiter (6) durch jeweils einen induktiven Stromwandler (19) erfasst.

2. Energieverteilungsanlage nach Anspruch 1, **dadurch gekennzeichnet, dass** der Stromsensor (12) den Strom (i_local) zwischen der lokalen Installation (3) und dem Verbindungsknotenpunkt (16) erfasst.

3. Energieverteilungsanlage nach Anspruch 1, **dadurch gekennzeichnet, dass** der Stromsensor (12) den Strom (i_grid) zwischen dem Spannungsnetz (1) und dem Verbindungsknotenpunkt (16) erfasst.

**4.** Energieverteilungsanlage nach Anspruch 2 oder 3, **dadurch gekennzeichnet, dass** die Steuervorrichtung (5) den nicht durch den Stromsensor (12) erfassten Teilstrom (i_grid bzw. i_local) aus den gemessenen Teilströmen (i_pv; i_local bzw. i_grid) rechnerisch bestimmt.

**5.** Stromsensor für eine Energieverteilungsanlage nach Anspruch 1, **dadurch gekennzeichnet, dass** der Stromsensor (12) für jede Phasenleiter (6) der Hauptleitung (15) eine Spule mit einem geschlossenen Kern (20) aufweist, durch den der jeweilige Phasenleitern (6) hindurchgeführt ist.

**6.** Stromsensor nach Anspruch 5, **dadurch gekennzeichnet, dass** der Kern (20) aus mehreren miteinander verbindbaren Abschnitten besteht, die zusammengefügt einen geschlossenen Kern ausbilden.

Fig. 1

i_grid

i_pv

i_local

u_pv

i_pv

3~

=

=

=

=

=

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202010012658 U1